# EUROPÄISCHE PATENTANMELDUNG

(11) **EP 0 611 591 A1**
(43) Veröffentlichungstag der Anmeldung: **24.08.1994**
(21) Anmeldenummer: 94100571.2
(22) Anmeldetag: 17.01.1994
(51) Int. Cl.: B01D 53/36, A62D 3/00

(54) **Katalysatorsystem zur Entfernung von NOx, CO und polychlorierten Dibenzodioxinen/Dibenzofuranen aus Abgasen sowie Verfahren zur Entfernung dieser Schadstoffe aus Abgasen**

(30) Priorität: 13.02.1993 DE 4304323
(71) Anmelder: HÜLS AKTIENGESELLSCHAFT, D-45764 Marl (DE)
(72) Erfinder: Werner, Klaus, D-44805 Bochum (DE)

(57) **Zusammenfassung**

Die Erfindung betrifft ein aus drei Katalysatoren bestehendes Katalysatorsystem zur Entfernung von NOx, CO und polychlorierten Dibenzodioxinen/Dibenzofuranen aus Abgasen aus Verbrennungsanlagen, insbesondere aus Abfallverbrennungsanlagen. Die Katalysatoren sind in Strömungsrichtung des Abgases in der Weise angeordnet, daß sich an erster Stelle ein Katalysator zur Reduktion von NOx mit NH₃, an zweiter Stelle ein Katalysator zur Oxidation von CO und NH₃ mit molekularem Sauerstoff und an dritter Stelle ein Katalysator zur Oxidation von polychlorierten Dibenzodioxinen/Dibenzofuranen mit molekularem Sauerstoff befinden.

## Beschreibung

Die Erfindung betrifft ein Katalysatorsystem zur Entfernung von Stickoxiden (NOx), Kohlenmonoxid (CO), polychlorierten Dibenzodioxinen (PCDD) und polychlorierten Dibenzofuranen (PCDF) aus Abgasen aus Verbrennungsanlagen sowie ein Verfahren zur Entfernung dieser Schadstoffe aus den Abgasen mittels dieses Katalysatorsystems. Die Abgase aus Verbrennungsanlagen enthalten molekularen Sauerstoff.

Bei der unvollständigen Verbrennung von organischen Stoffen, beispielsweise in mit Steinkohle, Braunkohle oder schwerem Heizöl befeuerten Kraftwerken und insbesondere in Abfallverbrennungsanlagen (Anlagen zur Verbrennung von Müll, Klärschlamm und dergleichen) entstehen die oben genannten Schadstoffe. Sie können mit den Abgasen in die Umwelt gelangen und dort Schäden verursachen. Aus diesem Grund sind in der Bundesrepublik Deutschland Grenzwerte für die Emissionen dieser Schadstoffe gesetzlich vorgeschrieben. Dementsprechend müssen die Schadstoffe weitgehend aus den Abgasen entfernt werden. Die Schadstoffgehalte in den Abgasen müssen also in einem solchen Maße gemindert werden, daß die Grenzwerte für die Emissionen nicht mehr überschritten werden.

Aus dem Stand der Technik sind bereits Verfahren zur katalytischen Entfernung dieser Schadstoffe aus Abgasen bekannt.

Aus der DE-PS 24 58 888 ist ein "Verfahren zur reduktiven Zerstörung von Stickoxiden in Abgasen in Gegenwart von molekularem Sauerstoff" bekannt. Das Verfahren besteht in der katalytischen Reduktion von NOx mittels Ammoniak (NH₃) zu Stickstoff (N₂) bei erhöhter Temperatur, insbesondere bei 200 bis 500 °C. Der eingesetzte Katalysator enthält Titandioxid (TiO₂) und weitere spezielle Metalloxide, wie beispielsweise Wolframtrioxid (WO₃) und Vanadiumpentoxid (V₂O₅). Der Katalysator liegt in Wabenform oder als Pellets vor. Das Verfahren löst das Problem der Entfernung von NOx, nicht dagegen das Problem der Entfernung der polychlorierten Dibenzodioxine/Dibenzofurane.

Aus der EP-OS 0 400 591 ist ein "trägergestützter Katalysator zum Entfernen von NOx, CO und organischen Verbindungen aus Abgasen" bekannt. Der Katalysator enthält spezielle Metalloxide, wie beispielsweise WO₃ und V₂O₅. Ein bevorzugter Träger ist TiO₂. Der Katalysator liegt in Wabenform oder als Pellets vor. In einem Verfahren zur Entfernung von Schadstoffen aus Abgasen löst dieser Katalysator das Problem der Entfernung von NOx durch Reduktion mit NH₃ und auch das Problem der Entfernung von CO durch Oxidation mit molekularem Sauerstoff zu Kohlendioxid (CO₂), nicht dagegen das Problem der Entfernung der polychlorierten Dibenzodioxine/Dibenzofurane.

Aus der EP-PS 0 208 434 ist ein Verfahren zur gleichzeitigen Entfernung von NOx und CO aus einem Gas, das NOx, CO und O₂ enthält, bei erhöhter Temperatur, insbesondere bei 250 bis 400 °C, in Gegenwart eines Katalysators bekannt. Der Katalysator enthält spezielle Metalloxide, wie beispielsweise TiO₂ und WO₃ oder TiO₂ und V₂O₅, und jeweils zusätzlich Platin (Pt) oder Palladium (Pd). In dem Verfahren löst der Katalysator das Problem der Entfernung von NOx durch Reduktion mit NH₃ und das Problem der Entfernung von CO durch Umsetzung mit Wasserdampf, nicht dagegen das Problem der Entfernung der polychlorierten Dibenzodioxine/Dibenzofurane.

Aus der EP-PS 0 252 521 ist u. a. ein "Verfahren zum Abbau von polyhalogenierten Verbindungen in Abgasen" bei erhöhter Temperatur, insbesondere bei 300 bis 500 °C, in Gegenwart eines Katalysators bekannt. Der eingesetzte Katalysator enthält spezielle Metalloxide, wie beispielsweise TiO₂, WO₃ und V₂O₅. Er liegt in Wabenform oder als Pellets vor. Das Verfahren löst das Problem der Entfernung der polychlorierten Dibenzodioxine/Dibenzofurane durch Oxidation mit molekularem Sauerstoff, nicht dagegen das Problem der Entfernung von NOx und CO.

Aus der EP-OS 0 410 440 ist ein Katalysatorsystem zur "Reinigung von Abgasen aus überstöchiometrisch betriebenen Verbrennungsmotoren und Gasturbinen" bekannt. Das Katalysatorsystem liegt in einstückiger Wabenform vor. Im anströmseitigen Abschnitt der Waben befindet sich ein Katalysator zur selektiven Reduktion von NOx mit NH₃. Im abströmseitigen Abschnitt befindet sich ein Katalysator zur Oxidation von CO, unverbrannten Kohlenwasserstoffen und gegebenenfalls von durch den ersten Abschnitt durchgetretenem NH₃ (NH₃-Schlupf) mit molekularem Sauerstoff. Der Reduktionskatalysator ist ein Vollkatalysator, bestehend aus TiO₂ mit Zusätzen von WO₃ und V₂O₅ (0,45 Massen-% V₂O₅). Der Oxidationskatalysator ist ein Trägerkatalysator. Die Katalysatorbeschichtung enthält Pt (1,5 bzw. 2,5 Massen-% Pt). Die Betriebstemperatur des Katalysatorsystems liegt im Bereich von 250 bis 550 °C.

Nach einem ähnlichen Prinzip wurden auch schon Katalysatorsysteme entwickelt, welche in der Praxis zur Entfernung von Schadstoffen aus dem Abgas von Müllverbrennungsanlagen eingesetzt werden. Dabei wird ein Reduktionskatalysator zur Entfernung von NOx an erster Stelle in der Strömungsrichtung des Abgases und ein Oxidationskatalysator zur Entfernung von CO und der polychlorierten Dibenzodioxine/Dibenzofurane an zweiter Stelle angeordnet. In dem Verfahren zur Entfernung von Schadstoffen aus dem Abgas von Müllverbrennungsanlagen mit derartigen Katalysatorsystemen wird dem Abgas vor seinem Eintritt in das Katalysatorsystem NH₃ zugegeben. Gegen Ende der Laufzeit des ersten Katalysators kann es vorkommen, daß NH₃ nach dem ersten Katalysator durchtritt (NH₃-Schlupf) und die Wirksamkeit des zweiten Katalysators beeinträchtigt. Das hat zur Folge, daß die PCDD/PCDF-Emissionen erheblich schwanken und die vom Gesetzgeber vorgeschriebenen Grenzwerte u. U. überschritten werden. Somit ist das Problem der Entfernung der polychlorierten Dibenzodioxine/Dibenzofurane nicht befriedigend gelöst.

Die Aufgabe der Erfindung besteht darin, die Mängel des geschilderten Standes der Technik zu überwinden und ein Katalysatorsystem bereitzustellen, mit welchem ein Verfahren zur Entfernung von NOx, CO und polychlorierten Dibenzodioxinen/Dibenzofuranen aus Abgasen zuverlässig und zugleich wirtschaftlich durchgeführt werden kann.

Die Aufgabe wurde wie in den Patentansprüchen angegeben gelöst.

Das Katalysatorsystem der Erfindung zur Entfernung von NOx, CO und polychlorierten Dibenzodioxinen/Dibenzofuranen aus Abgasen besteht somit aus einem Katalysator zur Entfernung von NOx ("NOx-Katalysator", darunter wird ein Katalysator verstanden, der im wesentlichen zur Entfernung von NOx optimiert ist), einem Katalysator zur Entfernung von CO ("CO-Katalysator", darunter wird ein Katalysator verstanden, der im wesentlichen zur Entfernung von CO optimiert ist) und einem Katalysator zur Entfernung von polychlorierten Dibenzodioxinen/Dibenzofuranen ("Dioxin-Katalysator", darunter wird ein Katalysator verstanden, der im wesentlichen zur Entfernung von polychlorierten Dibenzodioxinen/Dibenzofuranen optimiert ist). Dabei sollen die Katalysatoren in Strömungsrichtung des Abgases in der angegebenen Reihenfolge angeordnet sein.

Die Katalysatoren sind grundsätzlich bekannt. Sie können jeweils in mehreren Lagen angeordnet sein (siehe Zeichnung).

Die Katalysatoren werden im allgemeinen durch Imprägnieren eines hitzebeständigen, porösen, keramischen Trägers erhalten. Bevorzugte Träger des NOx-Katalysators und des Dioxin-Katalysators bestehen im wesentlichen aus TiO₂ und WO₃. Der Träger des Dioxin-Katalysators besteht beispielsweise im wesentlichen aus TiO₂ oder aus TiO₂ und WO₃. Der aktive NOx-Katalysator und der aktive Dioxin-Katalysator weisen im allgemeinen in der für Gase frei zugänglichen Oberfläche V₂O₅ auf. Der aktive CO-Katalysator weist im allgemeinen in der für Gase frei zugänglichen Oberfläche Pt und/oder Pd auf.

Die Träger sind vorzugsweise wabenförmige Träger.

Die zu reinigenden Abgase können weitere Schadstoffe, wie beispielsweise SO₂, SO₃ und HCl enthalten. Die weiteren Schadstoffe beeinträchtigen die Wirksamkeit des Katalysatorsystems nicht.

Im Falle eines SO₂-enthaltenden Abgases weist der Dioxin-Katalysator vorzugsweise einen höheren V₂O₅-Gehalt in der für Gase frei zugänglichen Oberfläche auf als der NOx-Katalysator. Der NOx-Katalysator enthält dann beispielsweise 0,1 bis 1,5 Massen-% V₂O₅ und der Dioxin-Katalysator 2,0 bis 5,0 Massen-% V₂O₅, bezogen auf den aktiven Katalysator. Im Dioxin-Katalysator wird SO₂ mit molekularem Sauerstoff weitgehend zu SO₃ oxidiert.

Im Falle eines SO₂-freien Abgases enthalten der NOx-Katalysator und der Dioxin-Katalysator unabhängig voneinander beispielsweise 2,0 bis 5,0 Massen-% V₂O₅, bezogen auf den aktiven Katalysator.

Der CO-Katalysator enthält beispielsweise 0,1 bis 1,0 Massen-% Pt und/oder Pd, bezogen auf den aktiven Katalysator.

Im Verfahren der Erfindung zur Entfernung von NOx, CO und polychlorierten Dibenzodioxinen/Dibenzofuranen aus Abgasen aus Verbrennungsanlagen wird zunächst NH₃ oder ein NH₃-Vorläufer, beispielsweise eine wäßrige Harnstofflösung, in das heiße, molekularen Sauerstoff enthaltende Abgas eingedüst, so daß es sich darin gleichmäßig verteilt. Das so mit einer hinreichenden Menge NH₃ beladene Abgas wird über den NOx-Katalysator geleitet. An diesem findet die katalytische Reduktion von NOx mittels NH₃ zu Stickstoff bei erhöhter Temperatur, d. h. im allgemeinen bei 150 bis 500 °C, insbesondere bei 200 bis 400 °C, statt.

Das Abgas wird in der Folge über den CO-Katalysator geleitet. An diesem findet die katalytische Oxidation von CO mit molekularen Sauerstoff zu CO₂ bei erhöhter Temperatur, d. h. im allgemeinen bei 150 bis 500 °C, insbesondere bei 200 bis 400 °C, statt. Falls gegen Ende der Laufzeit des NOx-Katalysators NH₃ durchtritt (NH₃-Schlupf), wird dieses am CO-Katalysator mit molekularen Sauerstoff zu Stickstoff oxidiert.

Das Abgas wird in der weiteren Folge über den Dioxin-Katalysator geleitet. An diesem findet die katalytische Oxidation der polychlorierten Dibenzodioxine/Dibenzofurane mit molekularen Sauerstoff bei erhöhter Temperatur, d. h. im allgemeinen bei 150 bis 500 °C, insbesondere bei 200 bis 400 °C, unter Bildung von unproblematischen Abbauprodukten statt.

Die Vorteile der Erfindung zeigen sich besonders deutlich in einem Verfahren zur Entfernung von NOx, CO und polychlorierten Dibenzodioxinen/Dibenzofuranen aus Abgasen aus einer Abfallverbrennungsanlage.

Die Erfindung wird durch das folgende Beispiel erläutert.

Das Abgas ist das Rauchgas aus einer Müllverbrennungsanlage. Es ist wie folgt charakterisiert:

| | |
|---|---|
| O₂: | 9 Vol.-% (bezogen auf trockenes Rauchgas) |
| H₂O: | 23 Vol.-% |
| SO₂: | 100 mg/Nm³ |
| NOx: | 650 mg/Nm³ |
| CO: | 100 mg/Nm³ |
| PCDD/PCDF: | ca. 30 ng toxical equivalents/Nm³ |

Das Katalysatorsystem ist wie in der folgenden schematischen Zeichnung angeordnet. Die Katalysatorträger sind wabenförmig (Stabkantenlänge 150 mm x 150 mm; Pitch 4,3 mm; Anzahl der Kanäle 35 x 35). Sie bestehen im wesentlichen aus TiO₂ und WO₃. Die Katalysatoren sind durch Imprägnierung des Trägers erhalten. Sie sind durch die folgenden Gehalte, jeweils bezogen auf den aktiven Katalysator, charakterisiert:

| | |
|---|---|
| NOx-Katalysator: | 0,6 Massen-% V₂O₅ |
| CO-Katalysator: | 0,1 Massen-% Pt |
| Dioxin-Katalysator: | 3,0 Massen-% V₂O₅ |

Die Katalysatorvolumina sind:

| | |
|---|---|
| 1. Ebene (NOx-Katalysator): | 11,9 m³ |
| 2. Ebene (CO-Katalysator): | 1,9 m³ |
| 3. Ebene (Dioxin-Katalysator): | 38,6 m³ |

In das Rauchgas wird die erforderliche Menge NH₃ eingedüst. 100 000 Nm³ Rauchgas/h werden bei 320 °C auf das Katalysatorsystem geleitet (space velocity 1904 [h⁻¹]).

| | |
|---|---|
| 1. Ebene (NOx-Katalysator) NOx (Ausgang): | 100 mg/Nm³ |

| | |
|---|---|
| 2. Ebene (CO-Katalysator) CO (Ausgang): | 20 mg/Nm³ |

| | |
|---|---|
| 3. Ebene (Dioxin-Katalysator) PCDD/PCDF (Ausgang): | 0,1 ng toxical equivalents/Nm³ |

Die Schadtstoffgehalte des gereinigten Abgases sind:

| | |
|---|---|
| NOx: | 100 mg/Nm³ |
| CO: | 20 mg/Nm³ |
| PCDD/PCDF: | 0,1 ng toxical equivalents/Nm³ |

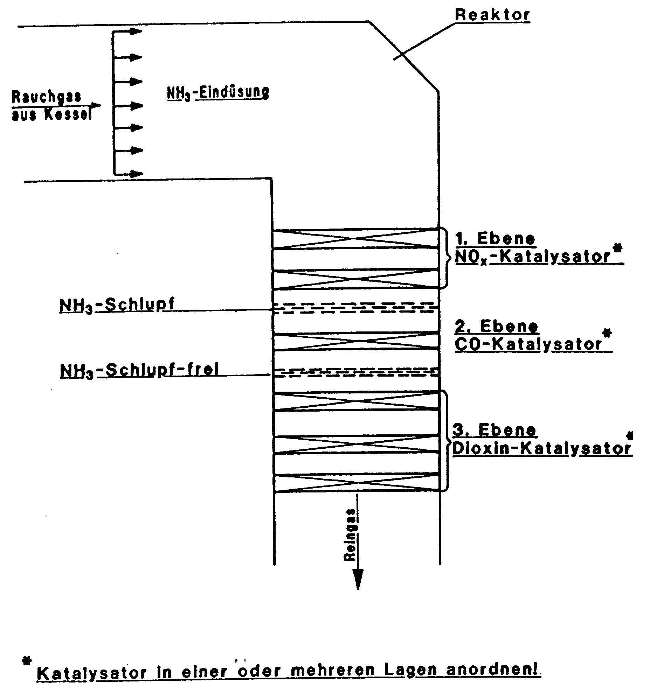

## Patentansprüche

1. Katalysatorsystem zur Entfernung von NOx, CO und polychlorierten Dibenzodioxinen/Dibenzofuranen aus Abgasen aus Verbrennungsanlagen, bestehend aus
- einem Katalysator zur Entfernung von NOx durch Reduktion mit NH₃ (NOx-Katalysator),
- einem Katalysator zur Entfernung von CO und NH₃ durch Oxidation mit molekularem Sauerstoff (CO-Katalysator) und
- einem Katalysator zur Entfernung von polychlorierten Dibenzodioxinen/Dibenzofuranen durch Oxidation mit molekularem Sauerstoff (Dioxin-Katalysator),
wobei die Katalysatoren in Strömungsrichtung des Abgases in der angegebenen Reihenfolge angeordnet sind.

2. Katalysatorsystem nach Anspruch 1,
dadurch gekennzeichnet,
daß die Katalysatoren durch Imprägnierung eines hitzebeständigen, porösen, keramischen Trägers erhalten sind.

3. Katalysatorsystem nach Anspruch 2,
dadurch gekennzeichnet,
daß die Träger des NOx-Katalysators und des Dioxin-Katalysators im wesentlichen aus TiO₂ und WO₃ bestehen,
der aktive NOx-Katalysator und der aktive Dioxin-Katalysator in der für Gase frei zugänglichen Oberfläche V₂O₅ und
der aktive CO-Katalysator in der für Gase frei zugänglichen Oberfläche Pt und/oder Pd aufweisen.

4. Katalysatorsystem nach Anspruch 2 oder 3,
dadurch gekennzeichnet,
daß der Träger ein wabenförmiger Träger ist.

5. Katalysatorsystem nach Anspruch 3 oder 4,
dadurch gekennzeichnet,
daß im Falle eines SO₂-enthaltenden Abgases der Dioxin-Katalysator einen höheren V₂O₅-Gehalt in der für Gase frei zugänglichen Oberfläche aufweist als der NOx-Katalysator.

6. Verfahren zur Entfernung von NOx, CO und polychlorierten Dibenzodioxinen/Dibenzofuranen aus Abgasen aus Verbrennungsanlagen durch Zugabe von NH₃ oder eines NH₃-Vorläufers zum molekularen Sauerstoff enthaltenden Abgas und Leiten des Abgases über ein Katalysatorsystem bei 150 bis 500 °C,
dadurch gekennzeichnet,
daß das Abgas über ein Katalysatorsystem gemäß einem der Ansprüche 1 bis 5 geleitet wird.

7. Verfahren nach Anspruch 6,
dadurch gekennzeichnet,
daß das Abgas bei 200 bis 400 °C über das Katalysatorsystem geleitet wird.

8. Verfahren nach Anspruch 6 oder 7,
dadurch gekennzeichnet,
daß das Abgas aus einer Abfallverbrennungsanlage stammt.
